# EUROPÄISCHE PATENTANMELDUNG

(11) **EP 2 369 320 A1**
(43) Veröffentlichungstag der Anmeldung: **28.09.2011**
(21) Anmeldenummer: 10157143.8
(22) Anmeldetag: 22.03.2010
(51) Int. Cl.: G01N 15/08

(54) **Verfahren zur simulation von feinleckagen an flüssigkeitsbefüllten behältern**

(71) Anmelder: Boehringer Ingelheim International GmbH, 55216 Ingelheim (DE)
(72) Erfinder: Schmidt, Michael, 55216 Ingelheim am Rhein (DE)
(74) Vertreter: Hammann, Heinz

(57) **Zusammenfassung**

Bei einem Verfahren zur Herstellung eines eine gewünschte Feinleckage in Form einer definierten Diffusionsrate an Flüssigkeitsbestandteilen bereitstellenden Behälters (1) mit in einem von einer flexiblen, diffusionsdichten Wandung (4) umgebenden Volumen (2) bevorrateter Flüssigkeit (3), insbesondere einer ethanolhaltigen Lösung, und einer Abgabeöffnung (9), wird die Feinleckage durch Verschließen der Abgabeöffnung (9) mit einer die gewünschte Diffusionsrate zumindest im Wesentlichen aufweisenden, diffusionsoffenen Folie (13) eingestellt.

## Beschreibung

Die Erfindung bezieht sich auf ein Verfahren zur Herstellung eines eine gewünschte Feinleckage in Form einer definierten Diffusionsrate an Flüssigkeitsbestandteilen bereitstellenden Behälters mit in einem von einer flexiblen, diffusionsdichten Wandung umgebenen Volumen bevorrateter Flüssigkeit, insbesondere einer ethanolhaltigen Lösung, und einer Abgabeöffnung.

Weiterhin bezieht sich die Erfindung auf einen Behälter, der ein von einer flexiblen, diffusionsdichten Wandung umgebenes, flüssigkeitsbefülltes Volumen mit daran ausgebildeter Abgabeöffnung umfasst und eine Feinleckage in Form einer definiert eingestellten Diffusionsrate an Flüssigkeitsbestandteilen aufweist.

Schließlich bezieht sich die Erfindung auf ein Verfahren zur Beurteilung und/oder Prüfung der Leckrate eines ein von einer flexiblen, diffusionsdichten Wandung umgebenes, flüssigkeitsbefülltes Volumen aufweisenden Behälters mit einer Abgabeöffnung durch Erzeugung einer eine definierte Diffusionsrate von Flüssigkeitsbestandteilen ermöglichenden Feinleckage.

Für die Verwendung von leicht flüchtigen Lösungsmitteln, wie Ethanol oder dergleichen, enthaltenden Lösungen, ist die Diffusionsdichtigkeit des als Packmittel das Lösungsmittel bzw. die Lösung bevorratenden Behälters ein wichtiger und zu berücksichtigender Einflussfaktor, der bei der Packmittelentwicklung zu beachten ist. Um beispielsweise eine Aufkonzentration einer in einem derartigen Lösungsmittel gelösten Wirkstoffformulierung, beispielsweise einer Formulierung mit einer pharmazeutischen Wirksubstanz, zum Ende der Gebrauchs- und/oder Laufzeit ausschließen zu können, wird eine gravimetrische Leckrate eines solchen Behälters von maximal 0,1 mg/Tag bei unkonditionierter Lagerung des Behälters gefordert.

In der Praxis werden so genannte Flexibel-Diffusions-Dicht-Behälter (FDD-Behälter) verwendet, die ein von einer diffusionsdichten Folie als flexibler Behälterwand umschlossenes, mit einer ethanolhaltigen Lösung als Flüssigkeit befülltes Volumen aufweisen. Die flexible Folie ist häufig als eine Polyethylen-Aluminium-Compound-Folie mit einem ultraschallverschweißten Verschlusssystem mit Abgabeöffnung ausgestaltet. Derartige FDD-Behälter müssen mit ausreichendem Sicherheitsabstand zu der maximal zulässigen Leck- oder Diffusionsrate diffusionsdicht sein. Zur Kontrolle der Diffusionsdichtigkeit wird ein gravimetrischer Lagertest angewendet, bei dem der Behälter auf einer Analysenwaage gewogen, vier Wochen bei 40°C/<20% rel. Feuchtigkeit gelagert und anschließend erneut gewogen wird. Der bei den beiden Wägungen auftretende Fehler durch Temperatureinfluss, Anhaftungen und statische Ladungen bestimmt hierbei maßgeblich die Lagerdauer. Da es sich bei einer Lagerzeit von vier Wochen um einen relativ langen Zeitraum handelt, der es nicht möglich macht, parallel zu einer aktuellen Produktion aus der Produktion entnommene Behälter daraufhin zu prüfen, ob sie die maximal zulässige Leck- bzw. Diffusionsrate aufweisen, werden Verfahren und Methoden gesucht, mit denen sich in einem deutlich kürzeren Zeitraum feststellen lässt, ob ein Behälter die geforderte maximale Leck- bzw. Diffusionsrate einhält.

Ein Problem bei der Entwicklung derartiger Methoden bzw. Geräte besteht darin, Behälter mit genau definierten Fein- oder Mikroleckagen herzustellen, anhand derer die Genauigkeit, Linearität und Reproduzierbarkeit der Messmethoden und Messgeräte geprüft werden kann. Versuche, in diesem Zusammenhang Behälter zu entwickeln, die die Anforderungen an einen "Kalibrierstandard" erfüllen, sind bisher nicht erfolgreich gewesen. Die Selektion von Produktionsausschussteilen oder Behältern mit einem entsprechend hohen Masseverlust aus gravimetrischen Reihenuntersuchungen war nicht erfolgreich, weil auf diese Art und Weise eine zu geringe Anzahl an Behältern mit dem geforderten/gewünschten Massenverlust aufgefunden wurden und darüber hinaus eine Selbstabdichtung der Behälter durch Quelleffekte beobachtet wurde. Auch die Maßnahme, beim Ultraschallschweißen während der Herstellung derartiger Behälter eine bewusste Fehleinstellung der Schweißparameter vorzunehmen, führte nicht zum Erfolg. Die auf diese Art und Weise gefertigten Behälter waren entweder dicht oder grob undicht und zeigten keine definierte Mikro- oder Feinleckage mit einer definierten Diffusionsrate. Auch die Manipulation der Ultraschallschweißung durch eingelegte Fasern und Fäden führte nicht zur reproduzierbaren Herstellung einer Mikroleckage definierter Diffusionsrate. Ferner ließ die Ausbildung von Mikrolöchern in der das Flüssigkeitsvolumen umgebenden flexiblen Folienbehälterwand durch Laserbeschuss keine Löcher reproduzierbarer Größe entstehen. Auch weitere Überlegungen führten nicht zum Ziel.

Es ist Aufgabe der Erfindung, ein Verfahren der eingangs genannten Art zu schaffen, das die Herstellung eines Behälters mit einer Feinleckage mit definierter Diffusionsrate ermöglicht. Ferner ist es Aufgabe der Erfindung, einen Behälter der eingangs genannten Art bereitzustellen, der eine Feinleckage mit definierter Diffusionsrate aufweist. Darüber hinaus liegt der Erfindung die Aufgabe zugrunde, einn Verfahren zur Beurteilung und/oder Prüfung der Leckrate eines behälters der eingangs genannten Art mit einer Feinleckage mit definierter Diffusionsrate anzugeben.

Erfindungsgemäß wird die Aufgabe bei dem erstgenannten Verfahren dadurch gelöst, dass die Feinleckage durch Verschließen der Abgabeöffnung mit einer die gewünschte Diffusionsrate zumindest im Wesentlichen aufweisenden, diffusionsoffenen Folie eingestellt wird.

Weiterhin wird die Aufgabe bei dem Behälter dadurch gelöst, dass die Abgabeöffnung mit einer die gewünschte Diffusionsrate zumindest im Wesentlichen aufweisenden, diffusionsoffenen Folie verschlossen ist.

Schließlich wird die Aufgabe bei dem zweitgenannten Verfahren dadurch gelöst, dass die Abgabeöffnung mit einer die gewünschte Diffusionsrate zumindest im Wesentlichen aufweisenden, diffusionsoffenen Folie verschlossen und der Behälter in einer Position mit an der Folie anstehender Flüssigkeit gelagert wird.

Überraschenderweise wurde festgestellt, dass Behälter, die eine definiert einstellbare Feinleckage in Form einer sich definiert einstellenden Diffusionsrate aufweisen, dadurch herstellbar sind, dass die Abgabeöffnung des Behälters mit einer diffusionsoffenen Folie verschlossen wird, wobei die diffusionsoffene Folie aufgrund ihrer Materialeigenschaft, also Folienart, ihrer Dicke oder Stärke oder der in ihr ausgebildeten Diffusionsfläche, die gewünschte Diffusionsrate bereitstellt. Die Erfindung baut auf der grundlegenden Erkenntnis auf, dass bei einem solchen Behälter der maximal zulässige Massenverlust von 0,1 mg/Tag ausschließlich durch diffusionsoffene Bereiche und nicht aufgrund von Löchern oder Poren im Behälter mit darin ausgebildeter laminarer Strömung verursacht wird. Demnach ist es also möglich, durch Auswahl einer geeigneten Folie und deren Verwendung zum Verschluss der Abgabeöffnung des Behälters die gewünschte Diffusionsrate als Fein- oder Mikroleckage auszubilden.

Zweckmäßigerweise wird eine Folie ausgewählt, die eine Diffusionsrate an Flüssigkeitsbestandteilen von 0,1 mg/Tag aufweist. Vorzugsweise wird eine 100 µm starke, diffusionsoffene Polyethylenfolie verwendet.

Um die Abgabeöffnung des Behälters bis auf die durch die diffusionsoffene Folie gebildete Diffusionsfläche abdichtend mit der diffusionsoffen Folie zu verschließen, wird das Verschließen der Abgabeöffnung durch Aufkleben oder Aufsiegeln der Folie auf den die Abgabeöffnung umgebenden Behälterwandbereich durchgeführt.

Damit die Folie sicher an der Abgabeöffnung des Behälters befestigt ist, ist vorzugsweise die Folie mittels eines zumindest einen Randbereich der Folie erfassenden Befestigungsringes, insbesondere Schnappringes, auf der Abgabeöffnung mechanisch gesichert. Ein derartiger, nach Art einer Blende ausgeführter, Befestigungsring hält die Folie sicher in ihrer die Abgabeöffnung verschließenden Position.

Durch Variation der Foliendicken oder des Folienmaterials können Behälter mit jeweils definierten, über einen längeren Zeitraum konstanten Masseverlusten zur Linearitätsprüfung bereitgestellt werden. Solche als Prüfkörper ausgebildeten Behälter können bei verschiedenen Detektionsmethoden, wie Foto- oder Flammen-Ionisation (PID/FID), bei der Gaschromatographie (GC) oder bei Detektionsmethoden mit auf Basis halbleitender Metalloxide (MOS)-Sensoren detektierenden Sensoren eingesetzt werden.

Das Verfahren zur Beurteilung und/oder Prüfung der Leckrate des Behälters zeichnet sich in Ausgestaltung dadurch aus, dass der Behälter regelmäßig gewogen und der durch Diffusion entstehende Masseverlust ermittelt wird. Insbesondere lassen sich mit dem Verfahren die Leckage- bzw. Diffusionsraten von Behältern definiert einstellen, die mit einer ethanolhaltigen Lösung, insbesondere einer pharmazeutischen Lösung, befüllt sind.

Der Behälter ist zur Simulation bestimmter Lagervorgänge mit definierten Testleckagen in Form von definierten Diffusionsraten ausgestattet und dient somit als "Kalibrierstandard", um definierte Verhältnisse zu produzieren, anhand deren Testmethoden entwickelt und geprüft werden können. Es lassen sich konstante Diffusionsraten bei unkonditionierter Lagerung der Behälter über längere Zeiträume einstellen und bleibend erhalten. Die Diffusionsrate des jeweiligen Behälters ist durch Variation der Foliendicke und/oder des Folienmaterials und/oder der Diffusionsfläche, beispielsweise durch den Einsatz von Blenden, wiederholbar und vorherbestimmbar. Die Behälter lassen sich einfach, reproduzierbar und kostengünstig herstellen. Ferner ermöglichen die Prüfkörper eine gravimetrische Kontroll- und Auswertemöglichkeit zur Bestimmung von Verlusten und damit einen direkten Bezug zu der spezifizierten Größe Massenverlust in mg/Tag.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

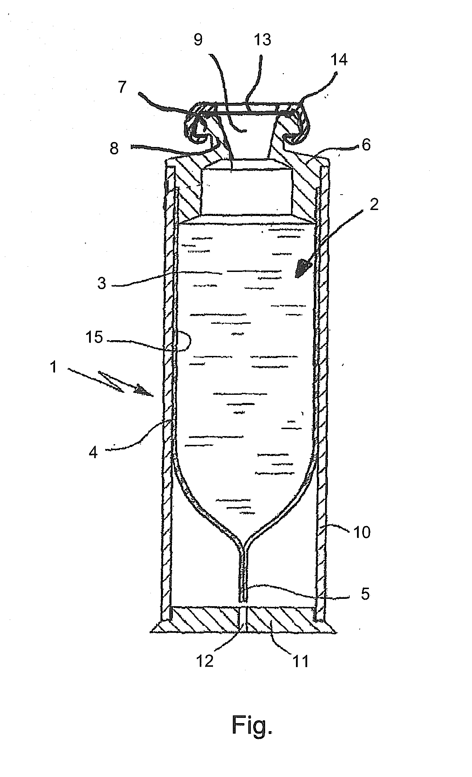

Die Erfindung wird im Folgenden anhand eines Ausführungsbeispieles unter Bezugnahme auf die zugehörige Zeichnung näher erläutert. Die einzige Fig. der Zeichnung zeigt eine schematische Schnittdarstellung eines nach dem erfindungsgemäßen Verfahren hergestellten Behälters.

Der Behälter 1 weist in seinem Inneren einen beutelartigen, ein Volumen 2 ausbildenden Fluidraum 15 zur Aufnahme einer Flüssigkeit 3 auf. Eine Behälterwand 4 des Fluidraums 15 ist zumindest bereichsweise flexibel bzw. kollabierbar ausgebildet und besteht aus einer diffusionsdichten und flexiblen Polyethylen-Aluminium-Compound-Folie. Bei der in dem Fluidraum 15 bevorrateten Flüssigkeit 3 handelt es sich insbesondere um eine ethanolhaltige Flüssigkeit, vorzugsweise eine ethanolhaltige pharmazeutische Formulierung oder Arzneimittelformulierung. Der Fluidraum 15 ist in einem Endbereich 5 durch Verschweißen der Behälterwand 4 verschlossen und mit seinem anderen Ende an einem Anschlussstück 6 befestigt. Mit einem zylinderartig hervorstehenden und einen umlaufenden Kragen 7 aufweisenden Anschlussstutzen 8 umschließt das Anschlussstück 6 eine Abgabeöffnung 9. Das Anschlussstück 6 und der Fluidraum 15 sind in eine starre Außenhülle 10 eingesetzt, die im Bereich des Endbereiches 5 des Fluidraums 15 mit einem Bodenstück 11 verschlossen ist, das mit einer Belüftungsöffnung 12 versehen ist. Auf dem die Abgabeöffnung 9 umgebenden Kragen 7 ist eine diffusionsoffene Folie 13 aufgeklebt oder aufgesiegelt. Zur ergänzenden mechanischen Festlegung der Folie 13 auf dem Kragen 7, ist auf den Kragen 7 ein Schnappring 14 aufgeprellt. Durch die Form des Schnappringes 14 verbleibt oberhalb der Abgabeöffnung 9 ein unabgedeckter, nach außen offener Bereich der diffusionsoffenen Folie 13, durch den Flüssigkeitsbestandteile aus dem Fluidraum 15 durch die 100 µm dicke Folie 13 nach außen diffundieren können, damit sich ein Masseverlust im Bereich vom 0,1 mg/Tag einstellt.

Je nach gewünschter Diffusionsrate können unterschiedlich dicke diffusionsoffene Folien 13 und/oder Folien 13 aus unterschiedlichem Material eingesetzt. Auch lässt sich die Diffusionsrate durch die von dem Schnappring 14 frei gehaltene Fläche der Folie 13 beeinflussen. Neben Polyethylen sind insbesondere Polypropylen oder Polyvinylchlorid geeignete Folienmaterialien.

Der Behälter 1 lässt sich als Prüfkörper bzw. Kalibrierstandard verwenden, da mit ihm aufgrund der diffusionsoffenen Folie 13 eine definierte Diffusionsrate für Flüssigkeitsbestandteile der Flüssigkeit 3 bereitgestellt wird. Zur Beurteilung der Leckrate wird der Behälter 1 in eine Position gebracht, in der die Flüssigkeit 3 an der Folie 13 ansteht. Beispielsweise kann dies durch Anordnung des Behälters 1 in der gegenüber der Darstellung in der Fig. um 180° gedrehten Überkopfstellung erfolgen. Gravimetrisch lässt sich dann der sich über einen festgelegten Beobachtungszeitraum einstellende Verlust über die Gewichtsabnahme des mit Flüssigkeit 3 befüllten Behälters 1 feststellen.

## Patentansprüche

1. Verfahren zur Herstellung eines eine gewünschte Feinleckage in Form einer definierten Diffusionsrate an Flüssigkeitsbestandteilen bereitstellenden Behälters (1) mit in einem von einer flexiblen, diffusionsdichten Wandung (4) umgebenen Volumen (2) bevorrateter Flüssigkeit (3), insbesondere einer ethanolhaltigen Lösung, und einer Abgabeöffnung (9), **dadurch gekennzeichnet, dass** die Feinleckage durch Verschließen der Abgabeöffnung (9) mit einer die gewünschte Diffusionsrate zumindest im Wesentlichen aufweisenden, diffusionsoffenen Folie (13) eingestellt wird.

2. Verfahren nach Anspruch 1, **dadurch gekennzeichnet, dass** zur Einstellung der jeweils gewünschten Diffusionsrate aus einer Mehrzahl an diffusionsoffenen Folien unterschiedlicher Dicke eine die gewünschte Diffusionsrate aufweisende Folie (13) ausgewählt wird.

3. Verfahren nach Anspruch 1 oder 2, **dadurch gekennzeichnet, dass** eine eine Diffusionsrate an Flüssigkeitsbestandteilen von 0,1 mg/Tag aufweisende Folie (13) ausgewählt wird.

4. Verfahren nach einem der Ansprüche 1 bis 3, **dadurch gekennzeichnet, dass** als Folie (13) eine 100 µm starke, diffusionsoffene Polyethylen (PE)-Folie ausgewählt wird.

5. Verfahren nach einem der Ansprüche 1 bis 4, **dadurch gekennzeichnet, dass** das Verschließen der Abgabeöffnung (9) durch Aufkleben oder Aufsiegeln der Folie (13) auf die die Abgabeöffnung (9) umgebende Wandung (4) des Behälters (1) durchgeführt wird.

6. Verfahren nach einem der Ansprüche 1 bis 5, **dadurch gekennzeichnet, dass** die Folie (13) mittels eines zumindest den Randbereich der Folie (13) erfassenden Befestigungsringes, insbesondere Schnappringes (14), auf der Abgabeöffnung (9) mechanisch gesichert wird.

7. Behälter mit einem von einer flexiblen, diffusionsdichten Wandung (4) umgebenen, flüssigkeitsbefüllten Volumen (2) mit daran ausgebildeter Abgabeöffnung (9) und einer Feinleckage in Form einer definiert eingestellten Diffusionsrate an Flüssigkeitsbestandteilen, **dadurch gekennzeichnet, dass** die Abgabeöffnung (9) mit einer die gewünschte Diffusionsrate zumindest im Wesentlichen aufweisenden, diffusionsoffenen Folie (13) verschlossen ist.

8. Behälter nach Anspruch 7, **dadurch gekennzeichnet, dass** er nach einem der Ansprüche 1 bis 6 hergestellt ist.

9. Verfahren zur Beurteilung und/oder Prüfung der Leckrate eines ein von einer flexiblen, diffusionsdichten Wandung (4) umgebenes, flüssigkeitsbefülltes Volumen (2) aufweisenden Behälters (1) mit einer Abgabeöffnung (9) durch Erzeugung einer eine definierte Diffusionsrate von Flüssigkeitsbestandteilen ermöglichenden Feinleckage, **dadurch gekennzeichnet, dass** die Abgabeöffnung (9) mit einer die gewünschte Diffusionsrate zumindest im Wesentlichen aufweisenden, diffusionsoffenen Folie (13) verschlossen und der Behälter (1) in einer Position mit an der Folie (13) anstehender Flüssigkeit (3) gelagert wird.

10. Verfahren nach Anspruch 9, **dadurch gekennzeichnet, dass** der Behälter (1) regelmäßig gewogen und der durch Diffusion entstehende Masseverlust ermittelt wird.

11. Verfahren nach Anspruch 9 oder 10, **dadurch gekennzeichnet, dass** die Abgabeöffnung (9) mit einer eine Diffusionsrate an Flüssigkeitsbestandteilen von 0,1 mg/Tag aufweisenden Folie (13) verschlossen wird.
